**Europäisches Patentamt**

**European Patent Office**

**Office européen des brevets**

(19)

(11) Veröffentlichungsnummer: **0 128 275**
**B1**

(12) **EUROPÄISCHE PATENTSCHRIFT**

(45) Veröffentlichungstag der Patentschrift:
17.12.86

(51) Int. Cl.⁴: **B 23 B 31/04**

(21) Anmeldenummer: 84102919.2

(22) Anmeldetag: 16.03.84

(54) Spannvorrichtung zum Einspannen des Schaftes eines Werkzeuges.

(30) Priorität: 08.06.83 DE 3320612

(43) Veröffentlichungstag der Anmeldung:
19.12.84 Patentblatt 84/51

(45) Bekanntmachung des Hinweises auf die Patenterteilung:
17.12.86 Patentblatt 86/51

(84) Benannte Vertragsstaaten:
AT BE CH DE FR GB IT LI LU NL SE

(56) Entgegenhaltungen:
DE-B-1 282 418
DE-B-1 427 034
DE-B-1 552 375
DE-B-2 010 100
DE-B-2 246 230
DE-B-2 606 206
US-A-4 094 521

(73) Patentinhaber: TBT Tiefbohrtechnik GmbH und Co.
KG., Siemensstrasse 1, D-7433 Dettingen (DE)

(72) Erfinder: Jenny, Werner, Sternbergstrasse 15,
D-7420 Münsingen (DE)

(74) Vertreter: Dreiss, Hosenthien & Fuhlendorf,
Gerokstrasse 6, D-7000 Stuttgart 1 (DE)

EP 0 128 275 B1

## Beschreibung

Die Erfindung betrifft eine Spannvorrichtung zum Einspannen des zylindrischen Schaftes eines Werkzeuges in eine Spannzange, die auf einer drehangetriebenen und in einem Gehäuse gelagerten Spindel angeordnet ist und radial nach innen drückbare Finger mit je einer äußeren schrägen Fläche aufweist, bei der zum Einspannen ein Druckring durch Federn auf die Spannzange einwirkt, wobei die Finger radial zusammengedrückt werden, und an der die Federn in einem sich mit der Spindel mitdrehenden Deckel abgestützt sind, und bei der zum Lösen des Werkzeuges der Druckring von einem Kolben gegen die Kraft der Federn axial verschiebbar ist, der in einem dem Druckring ungebundenen und sich nicht mit der Spindel mitdrehenden Kolbenführungszylinder angeordnet ist.

Eine derartige Spannvorrichtung ist aus der US-Patentschrift 40 94 521 bekannt geworden. Bei dieser Spannvorrichtung ist eine mit einer Spannzange vergleichbare mit Spannbacken versehene Spannhülse (collet 160) vorgesehen, die in axialer Richtung unverschiebbar zwischen einem Spindeladapter (60) und einem mit diesem verbundenen (44) tassenförmigen Spannhülsenhalteteil (20,21,23,24) angeordnet ist. Zur Einspannung wird ein Druckring (actuator slide 140) durch Federn (142) in Einspannstellung gedrückt, wobei dessen schräge Fläche auf eine schräge Fläche an der Spannhülse einwirkt und diese dabei radial zusammendrückt, allerdings ohne sie axial zu verschieben. Die Federn sind ebenfalls an dem tassenförmigen Spannhülsenhalteteil abgestützt. Zum Lösen der Einspannung verschiebt der Kolben (120) den Druckring derart, daß sich die schrägen Flächen von Druckring und Spannzange voneinander lösen und sich damit die Finger (168) der Spannzange radial aufweiten können. Der Kolben (120) ist in einem stationären Gehäusering (10, 80) verschiebbar angeordnet. Im Gehäusering ist der Spannhülsenteil mittels zweier Kugellager drehbar (122, 124) gelagert. Außerdem muß die Kraft zum Lösen des Werkzeugs von den Kugellagern aufgenommen werden, da der äußere Gehäusering schwimmend angeordnet ist.

Nachteilig an dieser Anordnung ist die Notwendigkeit der genannten Kugellager zur Abstützung des Spannhülsenhalteteils. Dies ist andererseits erforderlich, um die sehr großvolumige Einheit aufzunehmen und um eine gewisse Genauigkeit trotz der direkten Einspannung der Spannhülse in dem "schwimmend" gelagerten Druckring zu gewährleisten.

Durch die Lagerung wird die Möglichkeit beschränkt, die Maschine mit hohen Drehzahlen zu betreiben. Außerdem zeigt die genannte Schrift US-A-4094 521 keine Standard-Spannzangen, sondern eine Sonderspannzange mit Backen, die zum Tiefbohren nicht geeignet ist. Es ist davon auszugehen, daß man mit dieser Spanneinrichtung nur Drehzahlen bis zu 1000 U/min. erreichen kann.

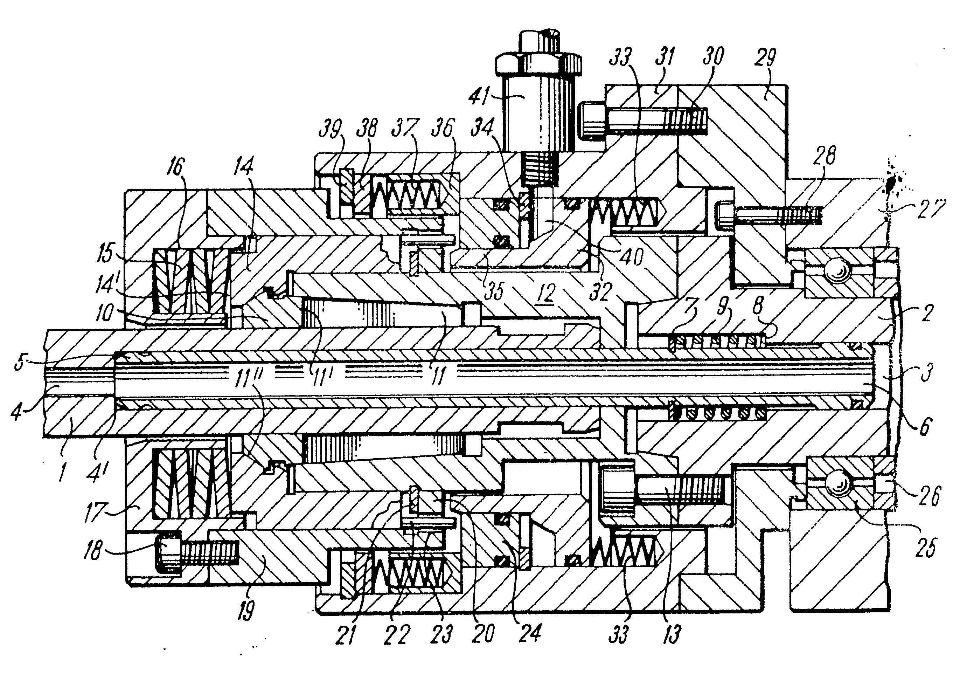

Die Genauigkeit ist bei dieser Anordnung dadurch begrenzt, daß die Spannzange radial nicht fest angeordnet, sondern im Druckring gelagert ist, der seinerseits axial verschiebbar ist. Der Druckring ist radial an zwei Stellen unterschiedlichen Durchmessers (vgl. in Fig. 3 Bezugszeichen 42 und in Fig. 1 Bezugszeichen 145) an dem sich drehenden Spannhülsenhalteteil abgestützt. Hier liegt trotz der Lagerung durch die Kugellager (122, 124) eine große Ungenauigkeits-Quelle.

Eine weitere Spannvorrichtung ist aus der DE-B-12 82 418 bekannt geworden. Bei ihr wird die Spannzange durch eine Spannhülse (Keilring 9), in der beweglich Spannbacken (11) angeordnet sind, gebildet. Nachteilig an dieser Anordnung ist, daß in Einspannstellung die volle von den Federn ausgeübte Kraft axial und radial von Schrägkugellagern (16, 17) übertragen werden muß.

Ferner ist an dieser Anordnung nachteilig, daß der gesamte Zylinder (19) mit dem Deckel (20) bei Druckbeaufschlagung wie eine Zugstange nach hinten gezogen werden muß. Dies ist - wie auch bei anderen mit Zugstangen arbeitenden Spannvorrichtungen - konstruktiv außerordentlich aufwendig, insbesondere wenn ein Tiefbohrwerkzeug eingespannt werden soll, dem über eine Bohrung im Schaft während des Bohrvorganges Kühl- und Schmiermittel zugeführt wird, diese in der Bohrspindel und in den Dichtrohren weiteren Platz benötigt.

Der Erfindung liegt die Aufgabe zugrunde, diese Nachteile zu vermeiden und eine Spannvorrichtung zu schaffen, die in möglichst einfacher Weise ohne Zugvorrichtungen im Axialbereich der Spannvorrichtung und der Bohrspindel eine einfache automatische Betätigung gestattet.

Erfindungsgemäß wird diese Aufgabe durch die im Kennzeichen des Patentanspruches 1 angegebenen Merkmale ge löst. Die Erfindung betrifft ferner verschiedene vorteilhafte Weiterbildungen.

Bei der Erfindung ist also direkt an der Spindel ein mit einer schrägen Fläche versehener Spannkonus und am Gehäuse direkt der Kolbenführungsteil angeordnet. In den Spannkonus wird die Spannzange durch den Druckring axial eingeschoben und damit verschoben. Der Druckring wird seinerseits durch die Federn in die Einspannstellung gedrückt. Die Verbindung Spannkonus/Deckel erfolgt dadurch, daß die Federn, die den Druckring in Einspannstellung drücken, auch den Deckel gegen einen Anschlag an Spannkonus ziehen. Die notwendige Kraft zum Lösen der Spannzange wird so geleitet, daß die Spindellager davon frei gehalten werden.

Während also der Druckring nach wie vor zur Betätigung dient, wird die Genauigkeit und Festigkeit der Aufnahme durch die Aufnahme der Spannzange im Spannkonus definiert. Die Spannzange wird dabei im Spannkonus, der seinerseits direkt mit der Spindel verbunden ist, genau aufgenommen. Außerdem sind keine Radiallager erforderlich, so daß hohe Drehzahlen (bis 15000 U/min.) möglich werden. Die Drehzahlen werden allein durch die Spindellager bestimmt. Außerdem läßt sich auf der Grundlage dieser Konstruktion das Anpressen des Schaftes des Werkzeuges an ein Dichtrohr in dem das Schmier- und Kühlmittel für das Tiefbohrwerkzeug zu führen ist, besonders einfach realisieren.

Ein Ausführungsbeispiel der Erfindung und ihrer vorteilhafte Weiterbildungen wird im folgenden unter Bezugnahme auf die beigefügte Zeichnung beschrieben. Sie stellt einen Schnitt durch ein Ausführungsbeispiel dar.

Durch die erfindungsgemäße Werkzeugspanneinrichtung soll ein Werkzeug mit einer sich drehenden Bohrspindel verbunden werden. Das Werkzeug weist den Schaft 1 auf. Es handelt sich dabei z.B. um ein Tiefbohrwerkzeug mit einer Bohrung 4, die zur Zuführung von Kühlund Schmiermittel an die Bohrstelle dient. Die Bohrspindel ist mit 2 bezeichnet und wird von einem (nicht gezeigten) Motor angetrieben. Sie weist eine Bohrung 3 auf. In der Bohrung 3 steckt ein Dichtrohr 5, das ebenfalls mit einer Bohrung 6 versehen ist, durch die die Bohrung 4 im Schaft 1 des Werkzeuges mit der Bohrung 3 in der Spindel zum Zwecke der Durchführung des Kühl- und Schmiermittels verbunden wird. Das Dichtrohr 5 ist mit einem Sicherungsring 7 verbunden. Zwischen dem Sicherungsring 7 und einem Anschlag 8 in der Bohrspindel 2 ist eine Druckfeder 9 wirksam, die das Dichtrohr 5 gegen den Absatz 4' im Schaft 1 des Werkzeuges drückt.

Der Schaft 1 des Werkzeuges ist von der Spannzange 10 umgeben. Die Spannzange weist ringsum verschiedene Schlitze bis zur Linie 11' auf. Dadurch werden ringsum verschiedene Finger 11 gebildet. Die Finger 11 sind von dem Spannkonus 12 umgeben, der mit Schrauben 13 an der sich drehenden Bohrspindel 2 befestigt ist. Daraus ergibt sich: Wird die Spannzange 10 bzw. die Finger 11 (in Figur 1) nach rechts gedrückt, so bewirken die aneinander liegenden schrägen Flächen der Finger 11 und des Spannkonus 12, daß die Finger 11 radial nach innen gedrückt werden und damit den Schaft 1 des Werkzeuges fest umgreifen und somit "spannen"; kann sich der Spannkonus 10 mit den Fingern 11 nach links verschieben, so wird die Spannung gelöst.

Gegen die linke schräge Stirnfläche 11'' liegt mit einer entsprechend schrägen Fläche der Druckring 14. Gegen die linke Stirnfläche 14' des Druckringes 14 drücken Tellerfedern 15, die in einer Aussparung 16 des Deckels 17 aufgenommen sind. Der Deckel 17 ist mit Schrauben 18 mit der Hülse 19 verbunden. Diese Manschette weist an ihrem (in Figur 1) rechten Ende einen radial nach innen gerichteten Flansch 20 auf, der an einem Sicherungsring 21 anliegt, der am Spannkonus 12 gefestigt ist. Da der Spannkonus 12 ja seinerseits, wie erwähnt, mittels Schrauben 13 an der Bohrspindel 2 befestigt ist, wird auf diese Weise auch die Hülse 19 und der mit ihr verbundene Deckel 17 gegen eine Bewegung nach links (in Figur 1) fest gehalten, so daß die Tellerfedern 15 in der Aussparung 16 des Deckels 17 somit auf den Druckring 14 einen Druck nach rechts (in Figur 1) ausüben, der wiederum über seine schräge Fläche Druck auf die schräge Fläche 11'' der Spannzange 11 ausübt und diese damit nach rechts drückt und damit dafür sorgt, daß die Finger 11 der Spannzange 10 radial nach innen gedrückt werden und damit in Spannstellung den Schaft 1 des (nicht gezeigten) Tiefbohrwerkzeuges fest umgreifen und damit spannen.

Der Druckring 14 weist an seinem rechten Ende ringsum und parallel zur Drehachse der Bohrspindel 2 - in Form fingerartiger Fortsätzemehrere Druckstifte 22 auf, die sich durch öffnungen 23 in der Manschette 19 hindurch erstrecken. Sie stehen über das rechte Ende der Manschette 19 etwa 5 mm vor. Sie werden zur Entspannung bzw. Lockerung der Spannvorrichtung von dem Kolben 24 nach links gedrückt. Drückt nämlich der Kolben 24 auf die fingerartigen Druckstifte 22, so bewegt sich dieser gegen die Kraft der Tellerfedern 15 nach links und gibt damit der Spannzange 10 die Möglichkeit, sich ebenfalls nach links zu bewegen, so daß die Finger 11 sich in radialer Richtung aufweiten können. Auf diese Weise wird die Umfassung des Schaftes 1 des Tiefbohrwerkzeuges durch die Finger 11 der Spannzange 10 gelockert und damit erfolgt die Entspannung der Spannvorrichtung. Zur Bewegung des Kolbens 24 nach links ist folgendes vorgesehen:

Die Bohrspindel 2 ist mittels Lager 25, 26 in einem Gehäuse 27 gelagert. An dieses Gehäuse 27 ist mit Hilfe von Schrauben 28 der Flansch 29 befestigt. An den Flansch 29 wiederum ist mit Schrauben 30 der Kolbenführungszylinder 31 befestigt. Er weist einen mehrfach abgestuften Innenraum auf. In ihm ist zunächst ein weiterer Kolben, nämlich der Kolben 32 angeordnet. Dieser wird von Druckfedern 33, die in Bohrungen in dem Kolbenführungszylinder 31 sitzen, nach links gegen den Sicherungsring 34 gedrückt, der am Kolbenführungszylinder 31 befestigt ist. Dieser Kolben 32 kann also gegen die Kraft der Druckfedern 33 in axialer Richtung nach rechts verschoben werden, dreht sich aber nicht mit der Bohrspindel mit, da er über die Federn 33 mit dem Kolbenführungszylinder 31, dem Flansch 29 und dem Gehäuse 27 verbunden ist.

Zwischen dem Kolbenführungszylinder 31 und der Nabe 35 des Kolbens 32 ist verschiebbar der bereits erwähnte Kolben 24 angeordnet. Er wird dadurch nach rechts gedrückt, daß an ihm der Ring 36 anliegt, der von Druckfedern 37 nach rechts gedrückt wird, die sich an dem Ring 38 abstützen, der seinerseits durch den Sicherungsring 9, welcher an dem Kolbenführungszylinder 31 befestigt ist, gegen eine Verschiebung nach links gesichert ist. Die Anordnung von Sicherungsring 39, Ring 38, Druckfedern 37 und Ring 36 dient also dazu, den Kolben 24 nach rechts zu drücken, aber gleichzeitig nach links verschiebbar (gegen den Druck der Federn 37) zu machen.

Wie ersichtlich, entsteht zwischen dem Kolben 24 und dem Kolben 32 ein Ringraum 40, dem über den Anschluß 41 unter Druck stehendes Medium, z.B. Öl, zugeführt werden kann. Erfolgt dies, so bewegt sich der Kolben 24 nach links. Damit drückt er gegen die fingerartigen Druckstifte 22 und verschiebt damit den Druckring 14 nach links. Dabei werden die Tellerfedern 15 zusammengedrückt. Gleichzeitig gibt damit der Druckring 14 dadurch, daß er von der schrägen Stirnfläche 11'' der Spannzange 10 sich hinwegbewegt, die Bewegung derselben nach links ebenfalls frei. Damit können sich die Finger 11 der Spannzange 10 radial aufweiten und die Spannzange 10 gibt damit den Schaft 1 des Tiefbohrwerkzeuges frei. Sobald der Druck des Drucköls in dem Ringraum 40 weggenommen wird, drücken die Tellerfedern 15 wieder den Druckring 14 nach rechts. Dieser drückt seinerseits wieder auf die schräge Stirnfläche 11'' der Spannzange 10, so daß die Finger 11 in den Spannkonus 12 hineingedrückt werden. Infolge der Schrägflächen der Finger 11 einerseits und des Spannkonus 12 andererseits erfolgt dabei eine Spannung der Finger 11 des Spannkonus 10 radial nach innen und damit ein Spannen des Schaftes 1 des Tiefbohrwerkzeuges.

### Patentansprüche

1. Spannvorrichtung zum Einspannen des zylindrischen Schaftes (1) eines Werkzeuges in eine Spannzange (10), die auf einer drehangetriebenen und in einem Gehäuse (27, 29) gelagerten Spindel (2) angeordnet ist und radial nach innen drückbare Finger (11) mit je einer äußeren schrägen Fläche aufweist, bei der zum Einspannen ein Druckring (14) durch Federn (15) auf die Spannzange (10) einwirkt, wobei die Finger (11) radial zusammengedrückt werden, und an der die Federn (15) in einem sich mit der Spindel (2) mitdrehenden Deckel (17) abgestützt sind, und bei der zum Lösen des Werkzeuges der Druckring (14) von einem Kolben (24) gegen die Kraft der Federn (15) axial verschiebbar ist, der in einem dem Druckring (14) umgebenden und sich nicht mit der Spindel (2) mitdrehenden Kolbenführungszylinder (31) angeordnet ist, dadurch gekennzeichnet, daß der Druckring (14) die Spannzange (10) mit ihren schrägen Flächen zur Anlage an der ebenfalls schrägen Innenfläche eines mit der Spindel (2) fest verbundenen und mitdrehenden Spannkonus (12) axial verschiebt und der Kolbenführungszylinder (31) mit dem Gehäuse (27, 29), in dem die Spindel (2) gelagert ist, fest verbunden ist.

2. Spannvorrichtung nach Anspruch 1, dadurch gekennzeichnet, daß der Druckring (14) auf den Spannkonus (12) ebenfalls mit einer schrägen Fläche auf eine weitere schräge Fläche (11'') der Spannzange (10) einwirkt, daß ferner der Deckel (17) mit einer den Druckring (14) umgebenden Hülse (19) verbunden ist, die durch die genannten Federn (15) gegen einen Anschlag (21) des Spannkonus (12) gezogen wird, wobei sich an dem Druckring (14) integral vorgesehene fingerartige Druckstifte (22) durch Öffnungen (23) in der Hülse (19) hindurch in axialer Richtung erstrecken, auf die der Kolben (24) beim Lösen der Einspannung einwirkt.

3. Spannvorrichtung nach Anspruch 2, dadurch gekennzeichnet, daß der Kolben (24), der bei Beaufschlagung durch das unter Druck stehende Medium den Druckring (14) verschiebt, zwischen einem ihn außen umgebenden Kolbenführungszylinder (31) und der Nabe (35) eines in Drehrichtung feststehenden weiteren Kolbens (32), der den Spannkonus (12) umgibt, angeordnet ist und daß das unter Druck stehende Medium den Raum (40) zwischen dem in Drehrichtung feststehendem Kolben (32) und dem genannten in axialer Richtung verschiebbaren Kolben (24) zugeführt wird.

4. Spannvorrichtung nach Anspruch 3, dadurch gekennzeichnet, daß der genannte in axialer Richtung verschiebbare und auf den Druckring (14) einwirkende Kolben (24) durch Federn (37) in seine Ruhestellung gedrückt wird.

### Claims

1. A clamping device for clamping the cylindrical shaft (1) of a tool into a vise (10), which is provided on a rotationally driven spindle (2) and supported in a housing (27, 29) and which has radially inwardly compressible fingers (11), each of which has an outer oblique surface, and with which for clamping a pressure ring (14) by spring means (15) engages the clamping vise (10), whereby the fingers (11) are radially compressed, and with which the spring means (15) abut that a cover member (17) rotating with the spindle (2), and with which for releasing the tool the pressure ring (14) is axially displaceable by a piston (24) against the force of said spring means (15), said piston being received in a piston guiding cylinder (31) surrounding the pressure ring (14) and rotating with the spindle (2), characterized in that the pressure (14) displaces the clamping vise (10) in axial direction such that its oblique surfaces engage the oblique interior surface of a conical clamping member (12), which is fixedly connected to the spindle (2) and rotates with it, and in that the piston guidance cylinder (31) is fixedly connected to the spindle (2) supporting housing (27, 29).

2. Clamping device in accordance to claim 1 characterized in that the pressure ring (14) also engages the conical clamping member (12) with an oblique surface on an oblique surface (11") of the clamping vise (10), and in that, further, the cover member (17) is connected to a sleeve (19) surrounding the pressure ring (14), which sleeve is biassed by said spring means (15) against an abutment (21) of the conical clamping member (12), whereby finger type pressure pins (22) integrally provided at the pressure ring (14) through openings (23) in the sleeve (19) in axial direction, on which pins the piston (24) acts when releasing the clamping.

3. Clamping device in accordance to claim 2, characterized in that piston (24), which, when acted upon by a pressurized medium, displaces the pressure member (14), is arranged between the piston guidance cylinder (31) outwardly surrounding the piston and a hub (35) of a further piston (32), which is stationary in the direction of rotation, and surrounding the conical clamping member (12), and which in that the pressurized medium is supplied to the space (40) between the piston (32), which is stationary in rotation of direction, and said axially displaceable piston (24).

4. Clamping device in accordance to claim 3, characterized in that the said axially displaceable and pressure ring (14) engaging piston (14) is pressed by further spring means (37) in to its idling condition.

## Revendications

1. Mandrin pour la fixation de la tige cylindrique (1) d'un outil dans une pince de serrage (10), qui est monté sur un arbre (2) entrainé en rotation et disposé dans un boîtier (27, 29) et qui présente des doigts (11) pouvant être pressés radialement vers l'intérieur avec une face biseautée extérieure chacun, une couronne de serrage (14) agissant à travers des ressorts (15), pour réaliser le serrage, sur la pince de serrage (10), les doigts (11) étant compressés radialement, et où les ressorts (15) s'appuient sur un couvercle (17) entrainé en rotation avec l'arbre (2) et où la couronne de serrage (14) est déplacée axialement, pour libérer l'outil, par un piston (24) agissant contre la force des ressorts (15), ce piston étant disposé dans un cylindre de guidage de piston (31) entourant la couronne de serrage (14) et ne tournant pas avec l'arbre (2), mandrin caractérisé en ce que la couronne de serrage (14) déplace axialement la pince de serrage (10) avec sa face biseautée pour l'appuyer sur la face intérieure également biseautée d'un cône de serrage (12) relié fermement à l'arbre (2) et entrainé en rotation avec celui-ci, et que le cylindre de guidage de piston (31) est fermement relié au boîtier (27, 29) dans lequel est disposé l'arbre (2).

2. Mandrin selon la revendication 1 caractérisé en ce que la couronne de serrage (14) agit sur le cône de serrage (12) également avec une face biseautée sur une autre face biseautée (11") de la pince de serrage (10), qu'en outre le couvercle (17) est relié avec une douille (19) entourant la couronne de serrage (14), qui est tirée par les ressorts (15) mentionnés contre une butée (21) du cône de serrage (12), des goujons de serrage (22) en forme de doigt, formés intégralement sur la couronne de serrage (14) s'étendant à travers des orifices (23) dans la douille (19) en direction axiale, le piston (24) agissant sur ces goujons lors de la libération du serrage.

3. Mandrin selon la revendication 2 caractérisé en ce que le piston (24), qui déplace la couronne de serrage (14) par action du milieu se trouvant sous pression, est disposé entre un cylindre de guidage de piston (31) l'entourant extérieurement et le moyeu (35) d'un autre piston (32) restant fixe dans le sens de la rotation, qui entoure le cône de serrage (12) et que le milieu se trouvant sous pression est amené dans la chambre (40) située entre le piston (32) restant fixe dans le sens de la rotation et le piston (24) mentionné, déplaçable en direction axiale.

4. Mandrin selon la revendication 3 caractérisé en ce que le piston (24) mentionné, déplaçable en direction axiale et agissant sur la couronne de serrage (14) est pressé dans sa position de repos par des ressorts (37).